(19)

Europäisches
Patentamt
European
Patent Office
Office européen
des brevets

(11) **EP 2 991 216 A2**

(12) **EUROPEAN PATENT APPLICATION**

(43) Date of publication:
**02.03.2016   Bulletin 2016/09**

(51) Int Cl.:
**H02M 5/293** *(2006.01)*          **H02M 5/297** *(2006.01)*

(21) Application number: **15182142.8**

(22) Date of filing: **24.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority:   **25.08.2014   JP 2014170941**

(71) Applicant: **Kabushiki Kaisha Yaskawa Denki Kitakyushu-shi, Fukuoka 806-0004 (JP)**

(72) Inventor: **INOMATA, Kentaro Fukuoka 806-0004 (JP)**

(74) Representative: **Grünecker Patent- und Rechtsanwälte PartG mbB Leopoldstraße 4 80802 München (DE)**

(54)   **MATRIX CONVERTER, MATRIX CONVERTER CONTROL DEVICE AND MATRIX CONVERTER CONTROL METHOD**

(57)    A matrix converter includes a power converter and a commutator. The power converter includes a plurality of bidirectional switches provided between respective phases of an AC power source and respective phases of a load. The commutator is configured to perform commutation control by which input phases connected to output phases are switched using the bidirectional switches. The commutator includes a selector configured to select one commutation pattern from a plurality of commutation patterns based on at least one of a state of phase voltages of the AC power source and a state of phase currents of the load, and a commutation controller configured to perform commutation control by controlling the bidirectional switches pursuant to the commutation pattern selected by the selector to switch a connection state of the AC power source and the load.

FIG.1

EP 2 991 216 A2

**Description**

BACKGROUND OF THE INVENTION

Field of the Invention

An embodiment disclosed herein relates to a matrix converter, a matrix converter control device and a matrix converter control method.

Description of the Related Art

A matrix converter includes a plurality of bidirectional switches which interconnect an AC power source and a load. By controlling the bidirectional switches and directly switching the respective phase voltages of the AC power source, the matrix converter outputs an arbitrary voltage and an arbitrary frequency to the load.

By individually on/off controlling the switching elements constituting the bidirectional switches in a predetermined order, the matrix converter performs commutation control by which to switch a connection state of the phase of the load and the phase of the AC power source. This makes it possible to prevent, for example, a short circuit between the phases of the AC power source or an open circuit the output phase of the AC power source.

As commutation methods used in commutation control, there are proposed many different methods including a four-step voltage commutation method and a four-step current commutation method. Furthermore, there is proposed a method in which a plurality of commutation methods are combined and the commutation methods used in commutation control are switched depending on the state of a phase voltage of an AC power source or the state of a phase current of a load (see, e.g., Japanese Patent Application Publication No. 2010-246174).

However, depending on, e.g., the combining method of the commutation methods or the switching condition of the commutation methods, the power conversion accuracy may be reduced.

In view of the above, an embodiment disclosed herein provides a matrix converter, a matrix converter control device and a matrix converter control method, which are capable of increasing the power conversion accuracy.

SUMMARY OF THE INVENTION

In accordance with an aspect, there is provided a matrix converter including: a power converter including a plurality of bidirectional switches provided between respective phases of an AC power source and respective phases of a load and a commutator configured to perform commutation control by which input phases connected to output phases are switched using the bidirectional switches. The commutator includes a selector configured to select one commutation pattern from a plurality of commutation patterns based on at least one of a state of phase voltages of the AC power source and a state of phase currents of the load, and a commutation controller configured to perform commutation control by controlling the bidirectional switches pursuant to the commutation pattern selected by the selector to switch a connection state of the AC power source and the load. The sum of values obtained by weighting characteristic values of respective ones of the plurality of the commutation patterns based on selection ratios at which the respective commutation patterns are selected by the selector is equal to or smaller than a characteristic value of one commutation pattern to be compared.

According to one embodiment, it is possible to provide a matrix converter, a matrix converter control device and a matrix converter control method, which are capable of increasing the power conversion accuracy.

BRIEF DESCRIPTION OF THE DRAWINGS

Fig. 1 is a diagram illustrating a configuration example of a matrix converter according to an embodiment.
Fig. 2 is a diagram illustrating a configuration example of a bidirectional switch.
Fig. 3 is a diagram illustrating one example of the switching of input phase voltages outputted to respective output phases.
Fig. 4 is a diagram illustrating a corresponding relationship between unidirectional switches of a plurality of bidirectional switches and gate signals.
Fig. 5A is a diagram illustrating a relationship between an output phase voltage and gate signals in the case where an output phase current is positive in a four-step current commutation method.
Fig. 5B is a diagram illustrating a relationship between an output phase voltage and gate signals in the case where an output phase current is negative in a four-step current commutation method.

Fig. 6 is a diagram illustrating the states of unidirectional switches in the four-step current commutation method illustrated in Fig. 5A.

Fig. 7 is a diagram illustrating a relationship between an output phase voltage, gate signals and respective steps of a commutation operation in a four-step voltage commutation method.

Fig. 8 is a diagram illustrating the states of unidirectional switches in the four-step voltage commutation method illustrated in Fig. 7.

Fig. 9A is a diagram illustrating a relationship between an output phase voltage and gate signals in a three-step current commutation method.

Fig. 9B is a diagram illustrating a relationship between an output phase voltage and gate signals in a three-step current commutation method.

Fig. 10A is a diagram illustrating a relationship between an output phase voltage and gate signals in a three-step voltage commutation method.

Fig. 10B is a diagram illustrating a relationship between an output phase voltage and gate signals in a three-step voltage commutation method.

Fig. 11A is a diagram illustrating a relationship between an output phase voltage and gate signals in a pseudo three-step current commutation method.

Fig. 11B is a diagram illustrating a relationship between an output phase voltage and gate signals in a pseudo three-step current commutation method.

Fig. 12A is a diagram illustrating a relationship between an output phase voltage and gate signals in a three-step voltage/current commutation method.

Fig. 12B is a diagram illustrating a relationship between an output phase voltage and gate signals in a three-step voltage/current commutation method.

Fig. 13A is a diagram illustrating a relationship between an output phase voltage and gate signals in a two-step current commutation method.

Fig. 13B is a diagram illustrating a relationship between an output phase voltage and gate signals in a two-step current commutation method.

Fig. 14 is a diagram illustrating a relationship between an output phase voltage, gate signals and respective steps of a commutation operation in a first two-step voltage commutation method.

Fig. 15A is a diagram illustrating a relationship between an output phase voltage and gate signals in a second two-step voltage commutation method.

Fig. 15B is a diagram illustrating a relationship between an output phase voltage and gate signals in a second two-step voltage commutation method.

Fig. 16A is a diagram illustrating a relationship between an output phase voltage and gate signals in a third two-step voltage commutation method.

Fig. 16B is a diagram illustrating a relationship between an output phase voltage and gate signals in a third two-step voltage commutation method.

Fig. 17A is a diagram illustrating a relationship between an output phase voltage and gate signals in a one-step current commutation method.

Fig. 17B is a diagram illustrating a relationship between an output phase voltage and gate signals in a one-step current commutation method.

Fig. 18A is a diagram illustrating a relationship between an output phase voltage and gate signals in a pseudo one-step current commutation method.

Fig. 18B is a diagram illustrating a relationship between an output phase voltage and gate signals in a pseudo one-step current commutation method.

Fig. 19 is a diagram illustrating one example of a combination of commutation methods.

Fig. 20 is a diagram illustrating a relationship between the dependency of the respective commutation methods on an output phase current and the dependency of the respective commutation methods on an input phase voltage.

Fig. 21 is a diagram illustrating a relationship between commutation completion times of commutation methods.

Fig. 22 is a diagram illustrating simulation results in the case where commutation control is performed by a combination of selected commutation methods and in the case where commutation control is performed by a four-step current commutation method.

Fig. 23 is a diagram illustrating a configuration example of a control unit.

Fig. 24 is a diagram illustrating a relationship between an output phase current and a predetermined range.

Fig. 25 is a diagram illustrating a relationship between an input phase voltage and a predetermined range.

Fig. 26 is a flowchart illustrating one example of a flow of a control process performed by a control unit.

DESCRIPTION OF THE EMBODIMENTS

An embodiment of a matrix converter, a matrix converter control device and a matrix converter control method disclosed herein will now be described in detail with reference to the accompanying drawings. The present disclosure is not limited to the embodiment to be described below.

[1. Configuration of Matrix Converter]

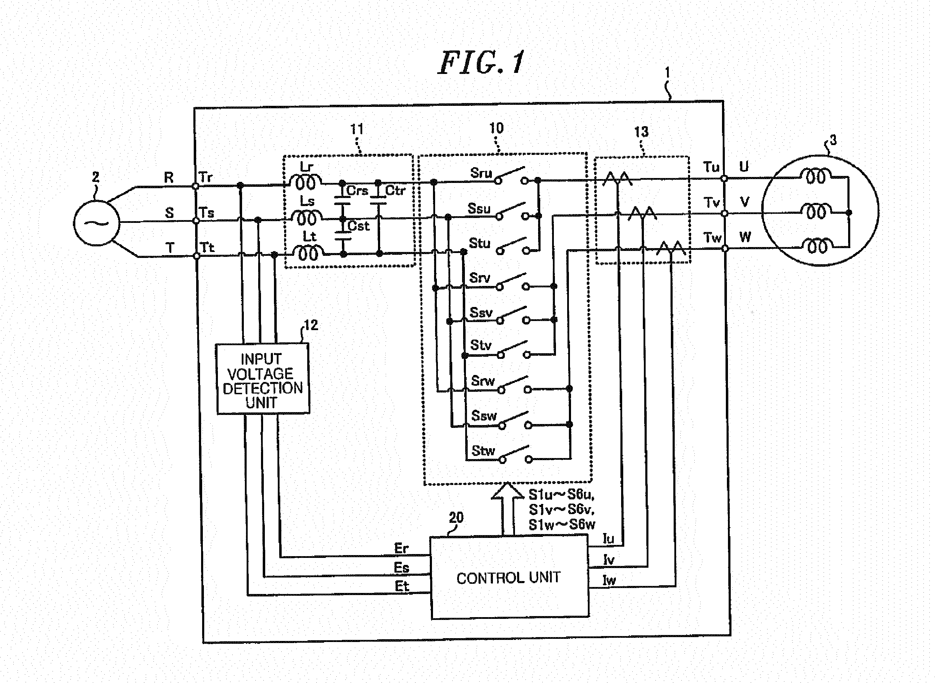

Fig. 1 is a diagram illustrating a configuration example of a matrix converter according to an embodiment. As illustrated in Fig. 1, the matrix converter 1 according to an embodiment is provided between a three-phase AC power source 2 (hereinafter simply referred to as an AC power source 2) and a load 3. The AC power source 2 is, e.g., a power system. The load 3 is, e.g., an AC motor or an AC generator. In the following descriptions, the R-phase, S-phase and T-phase of the AC power source 2 will be referred to as input phases, and the U-phase, V-phase and W-phase of the load 3 will be referred to as output phases.

The matrix converter 1 includes input terminals Tr, Ts and Tt, output terminals Tu, Tv and Tw, a power converter unit (e.g., a power converter) 10, an LC filter 11, an input voltage detection unit (e.g., an input voltage detector) 12, an output current detection unit (e.g., an output current detector) 13 and a control unit (e.g., a controller) 20. The matrix converter 1 converts a three-phase AC voltage supplied from the AC power source 2 via the input terminals Tr, Ts and Tt to a three-phase AC voltage having an arbitrary voltage and an arbitrary frequency, and outputs the converted three-phase AC voltage from the output terminals Tu, Tv and Tw to the load 3. The input voltage detection unit 12 may detect a voltage between the power converter unit 10 and the LC filter 11.

The power converter unit 10 includes a plurality of bidirectional switches Sru, Ssu, Stu, Srv, Ssv, Stv, Srw, Ssw and Stw (hereinafter often generically referred to as a bidirectional switch S) which interconnect the respective phases of the AC power source 2 and the respective phases of the load 3.

The bidirectional switches Sru, Ssu and Stu interconnect the R-phase, S-phase and T-phase of the AC power source 2 and the U-phase of the load 3. The bidirectional switches Srv, Ssv and Stv interconnect the R-phase, S-phase and T-phase of the AC power source 2 and the V-phase of the load 3. The bidirectional switches Srw, Ssw and Stw interconnect the R-phase, S-phase and T-phase of the AC power source 2 and the W-phase of the load 3.

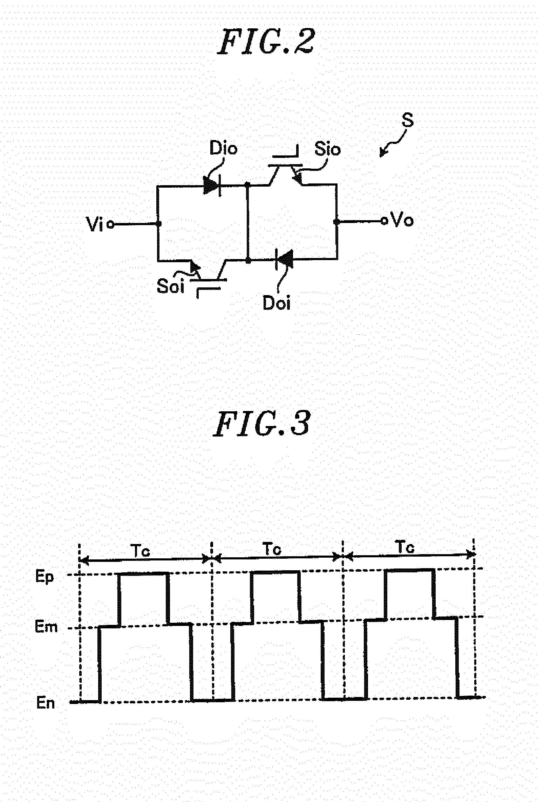

Fig. 2 is a diagram illustrating a configuration example of the bidirectional switch S. As illustrated in Fig. 2, the bidirectional switch S includes a circuit in which a unidirectional switch Sio and a diode Dio are serially connected and a circuit in which a unidirectional switch Soi and a diode Doi are serially connected. These serial connection circuits are connected in antiparallel.

It is only necessary that the unidirectional switch S is configured to include a plurality of unidirectional switches and is capable of controlling the conduction direction thereof. The unidirectional switch S is not limited to the configuration illustrated in Fig. 2. For example, in the example illustrated in Fig. 2, the cathodes of the diodes Dio and Doi are connected to each other. However, the bidirectional switch S may have a configuration in which the cathodes of the diodes Dio and Doi are not connected to each other.

The unidirectional switches Sio and Soi are, for example, semiconductor switching elements such as MOSFETs (Metal-Oxide-Semiconductor Field-Effect Transistors), IGBTs (Insulated Gate Bipolar Transistors) or the like. The unidirectional switches Sio and Soi may be, for example, wide-gap semiconductor switching elements such as FETs made of GaN, MOSFETs made of SiC or the like.

Referring back to Fig. 1, the matrix converter 1 will be further described. The LC filter 11 is provided between the R-phase, S-phase and T-phase of the AC power source 2 and the power converter unit 10. The LC filter 11 includes three reactors Lr, Ls and Lt and three capacitors Crs, Cst and Ctr. The LC filter 11 serves to remove a high-frequency component generated due to the switching of the bidirectional switch S.

The input voltage detection unit 12 detects the respective phase voltages of the R-phase, S-phase and T-phase of the AC power source 2. For example, the input voltage detection unit 12 detects instantaneous values Er, Es and Et (hereinafter referred to as input phase voltages Er, Es and Et) of the respective phase voltages of the R-phase, S-phase and T-phase of the AC power source 2.

The output current detection unit 13 detects a current flowing between the power converter unit 10 and the load 3. For example, the output current detection unit 13 detects instantaneous values Iu, Iv and Iw (hereinafter referred to as output phase currents Iu, Iv and Iw) of the current flowing between the power converter unit 10 and the U-phase, V-phase and W-phase of the load 3.

In the following descriptions, the respective phase voltages of the R-phase, S-phase and T-phase of the AC power source 2 will be often generically referred to as an input phase voltage Vi, and the output phase currents Iu, Iv and Iw will be often generically referred to as an output phase current Io. In addition, the voltages outputted from the power converter unit 10 to the U-phase, V-phase and W-phase of the load 3 will be often referred to as output phase voltages Vu, Vv and Vw.

The control unit 20 generates gate signals S1u to S6u, S1v to S6v and S1w to S6w based on the input phase voltages Er, Es and Et and the output phase currents Iu, Iv and Iw.

Fig. 3 is a diagram illustrating one example of the switching of the input phase voltages Ep, Em and En outputted to the respective output phases. The input phase voltage Ep is a largest input phase voltage among the input phase voltages Er, Es and Et. The input phase voltage Em is an intermediate input phase voltage among the input phase voltages Er, Es and Et. The input phase voltage En is a smallest input phase voltage among the input phase voltages Er, Es and Et.

As illustrated in Fig. 3, by virtue of the control of the bidirectional switch S using the gate signals S1u to S6u, S1v to S6v and S1w to S6w, for example, the input phase voltages outputted to the respective output phases are switched in the order of En, Em, Ep, Em and En during every carrier period Tc of a PWM voltage command. The switching of the input phase voltages outputted to the respective output phases may vary depending on the commutation pattern and is not limited to the one illustrated in Fig. 3.

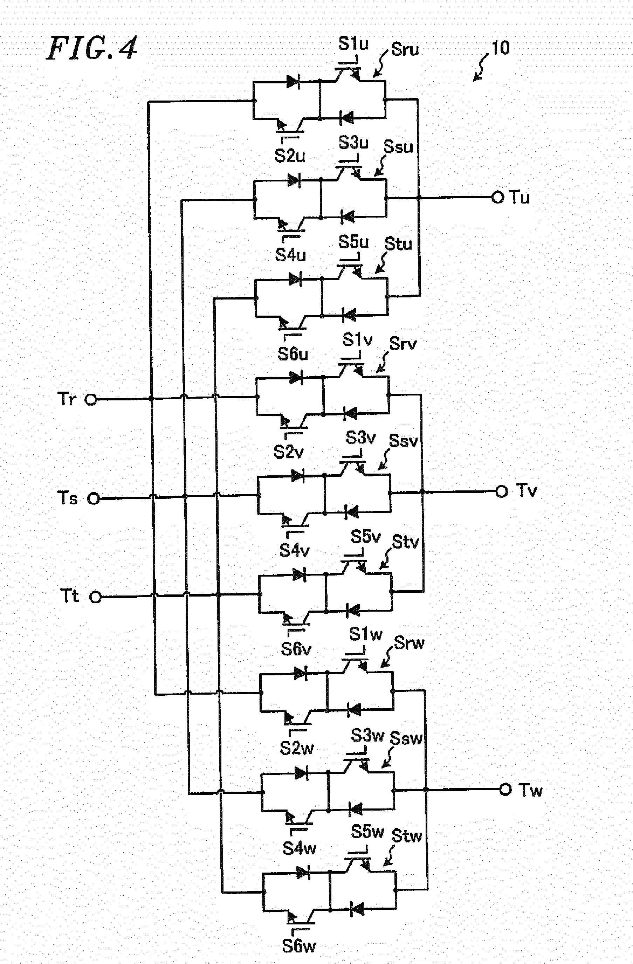

Fig. 4 is a diagram illustrating a corresponding relationship between the unidirectional switches Sio and Soi of the bidirectional switches Sru, Ssu, Stu, Srv, Ssv, Stv, Srw, Ssw and Stw and the gate signals S1u to S6u, S1v to S6v and S1w to S6w. In Fig. 4, the LC filter 11 and the output current detection unit 13 are omitted.

The unidirectional switches Sio (see Fig. 2) of the bidirectional switches Sru, Ssu and Stu are respectively controlled by the gate signals S1u, S3u and S5u. The unidirectional switches Soi (see Fig. 2) of the bidirectional switches Sru, Ssu and Stu are respectively controlled by the gate signals S2u, S4u and S6u.

The control unit 20 performs commutation control by which the connection state of the AC power source 2 and the load 3 is switched by selecting one commutation pattern from two or more kinds commutation patterns based on the state of the input phase voltage Vi and the state of the output phase current Io and controlling the bidirectional switch S pursuant to the selected commutation pattern. The commutation pattern which becomes a selection target of the control unit 20 is selected so as to satisfy a condition which is based on the selection ratio and the characteristic value thereof. Hereinafter, the kinds of the commutation patterns, the selection method of the commutation patterns, and the control unit 20 will be described one after another.

[2. Commutation Pattern]

Commutation patterns vary depending on the commutation methods. Examples of the commutation methods include a four-step current commutation method, a four-step voltage commutation method, a three-step current commutation method, a three-step voltage commutation method, a pseudo three-step current commutation method, a three-step voltage/current commutation method, a two-step current commutation method, first to third two-step voltage commutation methods, a one-step current commutation method, and a pseudo one-step current commutation method. Hereinafter, the commutation patterns of these commutation methods will be described.

(Commutation Pattern of Four-Step Current Commutation Method)

In the four-step current commutation method, in order to prevent the short circuit between the input phases and the opening of the output phases, depending on the polarity of the output phase current Io, commutation control is performed in the commutation pattern composed of the following Steps 1 to 4.

Step 1: Among the unidirectional switches that constitute the bidirectional switch S serving as a switching source, the unidirectional switch having a polarity opposite to that of the output phase current Io is turned off.

Step 2: Among the unidirectional switches that constitute the bidirectional switch S serving as a switching destination, the unidirectional switch having the same polarity as that of the output phase current Io is turned on.

Step 3: Among the unidirectional switches that constitute the bidirectional switch S serving as a switching source, the unidirectional switch having the same polarity as that of the output phase current Io is turned off.

Step 4: Among the unidirectional switches that constitute the bidirectional switch S serving as a switching destination, the unidirectional switch having a polarity opposite to that of the output phase current Io is turned on.

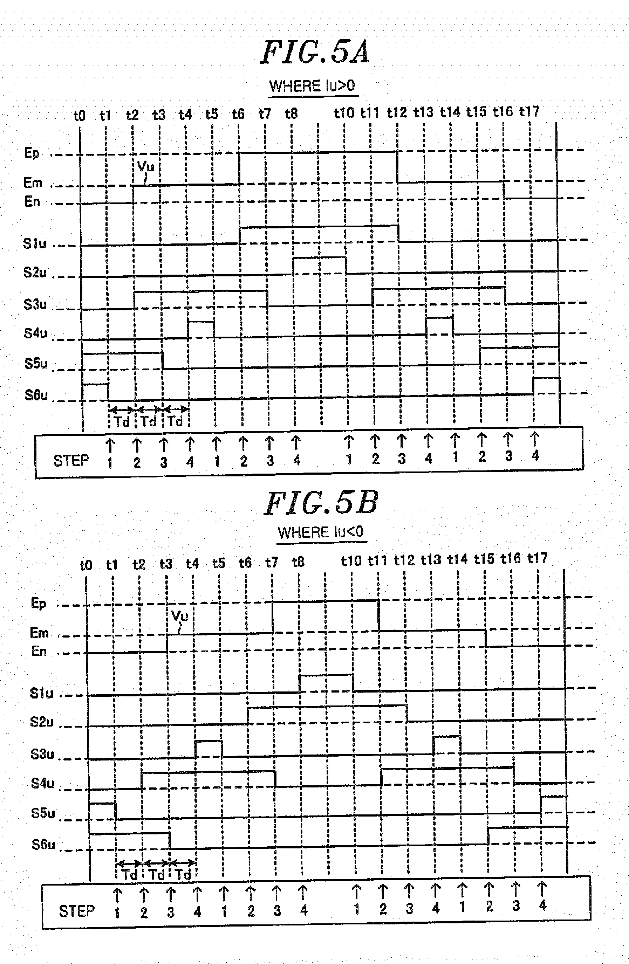

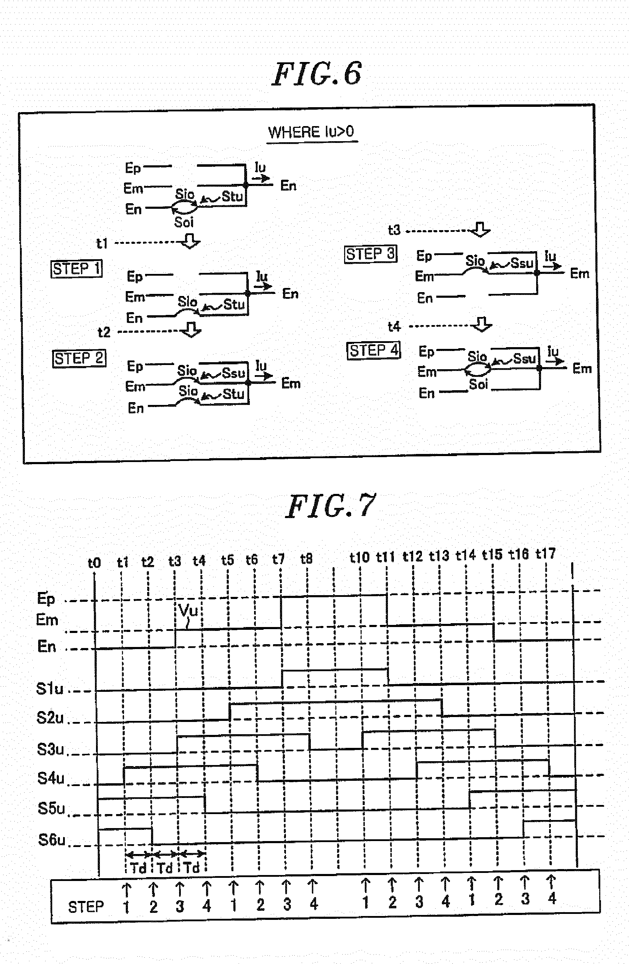

The commutation control using the four-step current commutation method is executed as illustrated in Figs. 5A and 5B. Figs. 5A and 5B are diagrams illustrating a relationship between the output phase voltage Vu and the gate signals S1u to S6u in the four-step current commutation method. Fig. 5A illustrates commutation control in the case where the output phase current Iu is positive, and Fig. 5B illustrates commutation control in the case where the output phase current Iu is negative. Fig. 6 is a diagram illustrating the states of the unidirectional switches Sio and Soi at time points t1 to t4 illustrated in Fig. 5A. It is assumed that Ep=Er, Em=Es, and En=Et.

(Commutation Pattern of Four-Step Voltage Commutation Method)

In the four-step voltage commutation method, in order to prevent the short circuit between the input phases and the opening of the output phases, depending on the magnitude relationship of the input phase voltages Er, Es and Et, commutation control is performed in the commutation pattern composed of the following Steps 1 to 4.

Step 1: The reverse-biased unidirectional switch serving as a switching destination is turned on.
Step 2: The reverse-biased unidirectional switch serving as a switching source is turned off.
Step 3: The forward-biased unidirectional switch serving as a switching destination is turned on.
Step 4: The forward-biased unidirectional switch serving as a switching source is turned off.

In the unidirectional switch Sio, the state in which an input-side voltage is lower than an output-side voltage immediately prior to commutation control is referred to as reverse-biased, and the state in which an input-side voltage is higher than an output-side voltage immediately prior to commutation control is referred to as forward-biased. In the unidirectional switch Soi, the state in which an input-side voltage is lower than an output-side voltage immediately prior to commutation control is referred to as forward-biased, and the state in which an input-side voltage is higher than an output-side voltage immediately prior to commutation control is referred to as reverse-biased.

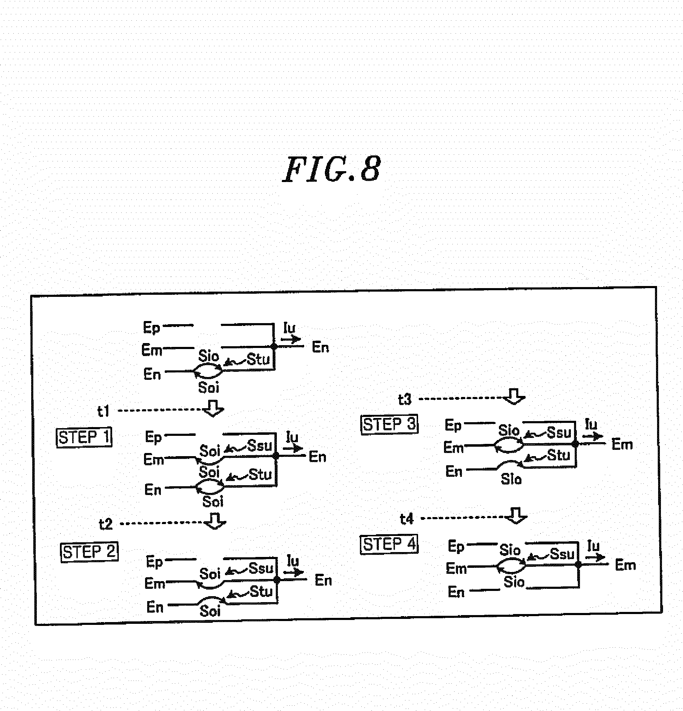

The commutation control using the four-step voltage commutation method is executed as illustrated in Fig. 7. Fig. 7 is a diagram illustrating a relationship between the output phase voltage Vu, the gate signals S1u to S6u and the respective steps of the commutation control in the four-step voltage commutation method. Fig. 8 is a diagram illustrating the states of the unidirectional switches Sio and Soi at time points t1 to t4 illustrated in Fig. 7. It is assumed that Ep=Er, Em=Es, and En=Et.

(Commutation Pattern of Three-Step Current Commutation Method)

The three-step current commutation method is a commutation method in which the input phase voltages outputted to the respective output phases at three steps are switched depending on the magnitude relationship between the input phase voltages Er, Es and Et and the polarity of the output phase current Io. The three-step current commutation method simultaneously performs two steps among four steps of the four-step current commutation method. The three-step current commutation method simultaneously performs a step of turning off one of the two reverse-biased unidirectional switches and a step of turning on the other reverse-biased unidirectional switch, among Steps 1 to 4 of the four-step current commutation method.

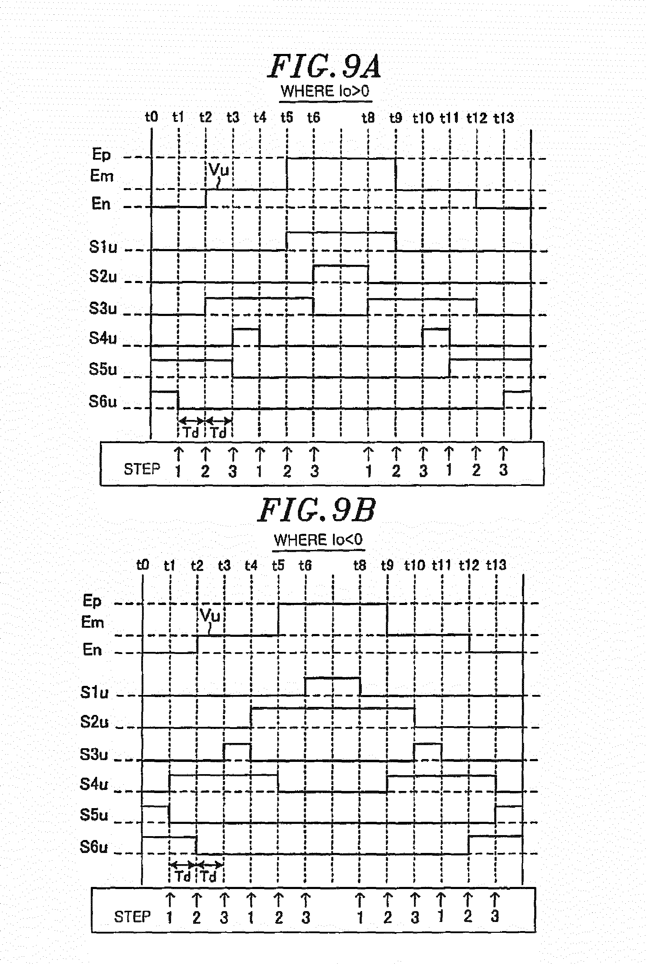

The commutation control using the three-step current commutation method is executed as illustrated in Figs. 9A and 9B. Figs. 9A and 9B are diagrams corresponding to Figs. 5A and 5B and illustrating a relationship between the output phase voltage Vu, the gate signals S1u to S6u and the respective steps of the commutation control in the three-step current commutation method.

(Commutation Pattern of Three-Step Voltage Commutation Method)

The three-step voltage commutation method is a commutation method in which the input phase voltages outputted to the respective output phases at three steps are switched depending on the magnitude relationship between the input phase voltages Er, Es and Et and the polarity of the output phase current Io. The three-step voltage commutation method simultaneously performs two steps among four steps of the four-step voltage commutation method. The three-step voltage commutation method simultaneously performs a step of turning off the switch having a polarity opposite to that of the output phase current Io and a step of turning on the switch having a polarity opposite to that of the output phase current Io, among Steps 1 to 4 of the four-step voltage commutation method.

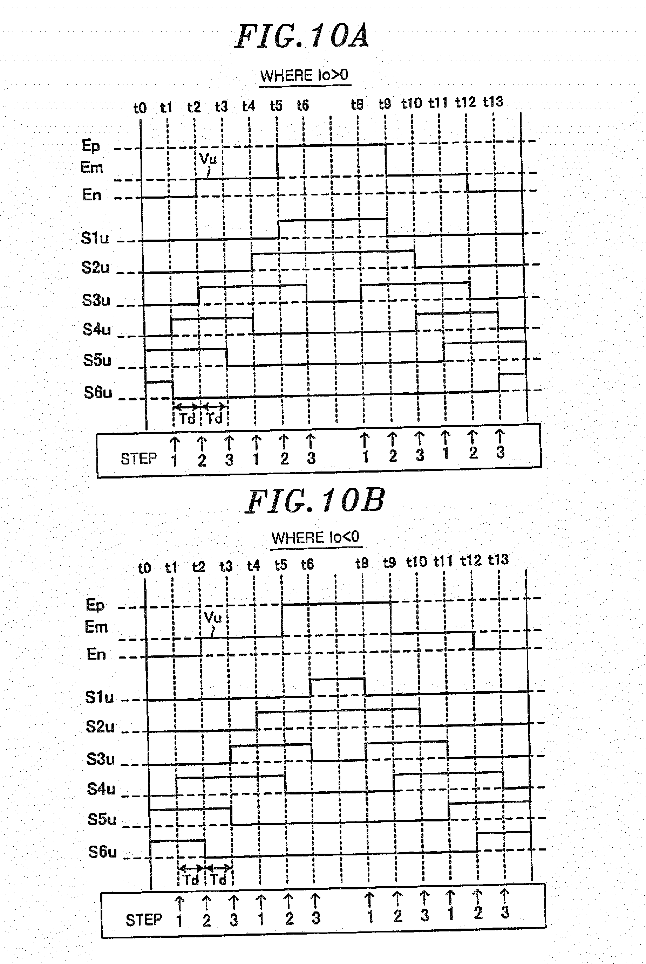

The commutation control using the three-step voltage commutation method is executed as illustrated in Figs. 10A and 10B. Figs. 10A and 10B are diagrams corresponding to Figs. 5A and 5B and illustrating a relationship between the output phase voltage Vu, the gate signals S1u to S6u and the respective steps of the commutation control in the three-step voltage commutation method.

(Commutation Pattern of Pseudo Three-Step Current Commutation Method)

The pseudo three-step current commutation method is a commutation method in which the input phase voltages outputted to the respective output phases at three steps are switched depending on the polarity of the output phase current Io. The pseudo three-step voltage commutation method simultaneously performs a step of turning off one of the two switches having the same polarity as that of the output phase current Io and a step of turning on the other switch, among Steps 1 to 4 of the four-step current commutation method.

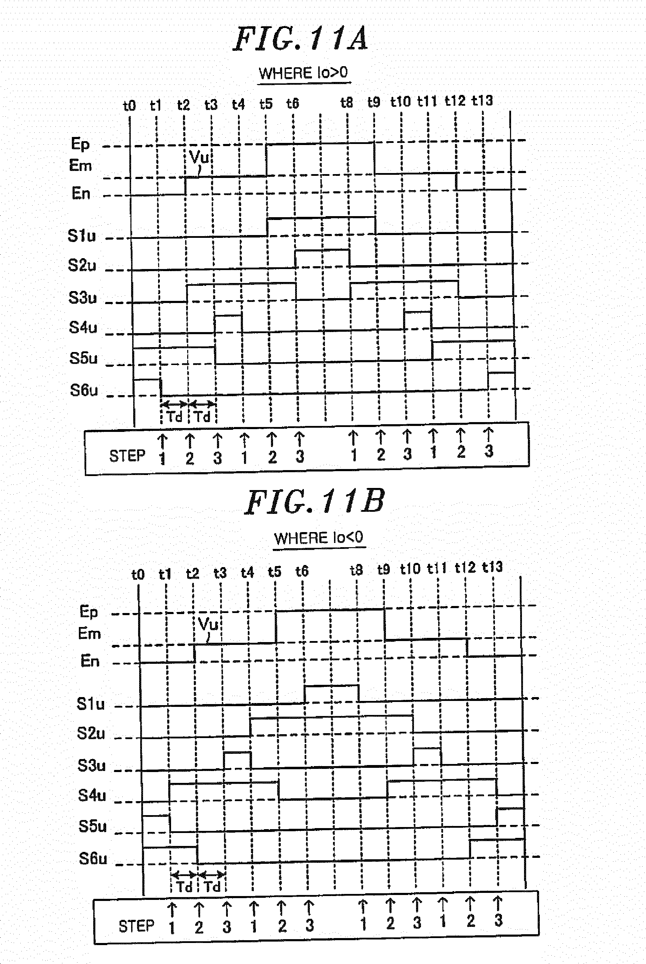

The commutation control using the pseudo three-step current commutation method is executed as illustrated in Figs. 11A and 11B. Figs. 11A and 11B are diagrams corresponding to Figs. 5A and 5B and illustrating a relationship between the output phase voltage Vu, the gate signals S1u to S6u and the respective steps of the commutation control

in the three-step current commutation method.

(Commutation Pattern of Three-Step Voltage/Current Commutation Method)

The three-step voltage/current commutation method is a commutation method in which the input phase voltages outputted to the respective output phases at three steps are switched depending on the magnitude relationship between the input phase voltages Er, Es and Et and the polarity of the output phase current Io. Steps 1 to 3 of the three-step voltage/current commutation method are, e.g., combinations of some of Steps 1 to 3 of the three-step current commutation method and some of Steps 1 to 3 of the three-step voltage commutation method.

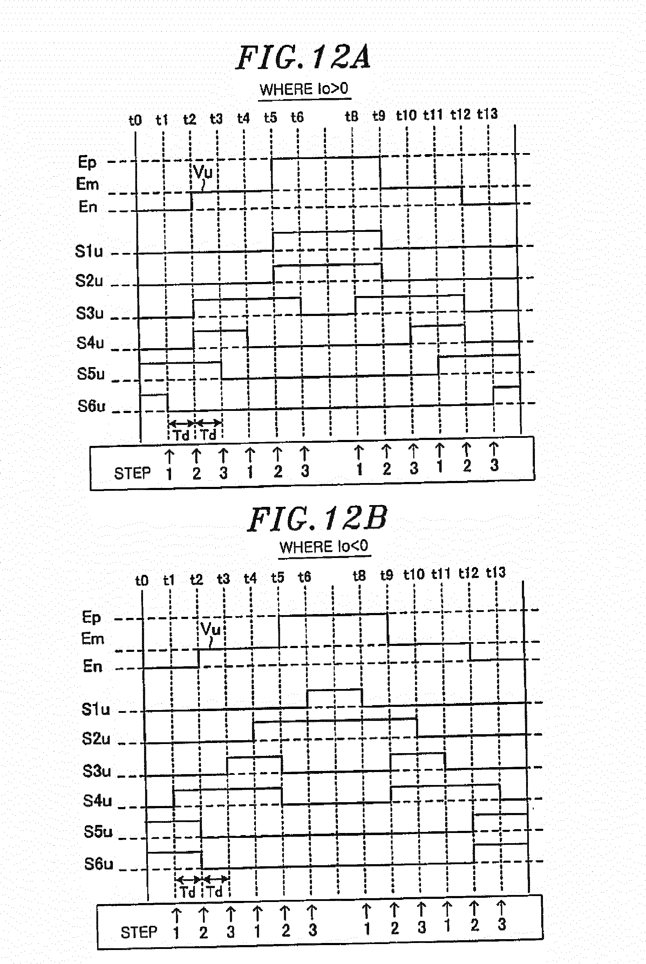

The commutation control using the three-step voltage/current commutation method is executed as illustrated in Figs. 12A and 12B. Figs. 12A and 12B are diagrams corresponding to Figs. 5A and 5B and illustrating a relationship between the output phase voltage Vu, the gate signals S1u to S6u and the respective steps of the commutation control in the three-step voltage/current commutation method.

(Commutation Pattern of Two-Step Current Commutation Method)

The two-step current commutation method is a commutation method in which the input phase voltages outputted to the respective output phases at two steps are switched depending on the polarity of the output phase current Io. The two-step current commutation method turns on the unidirectional switch having the same polarity as that of the output phase current Io among the bidirectional switches S serving as switching destinations (Step 1). Thereafter, the two-step current commutation method turns off the unidirectional switch having the same polarity as that of the output phase current Io among the bidirectional switches S serving as switching sources (Step 2).

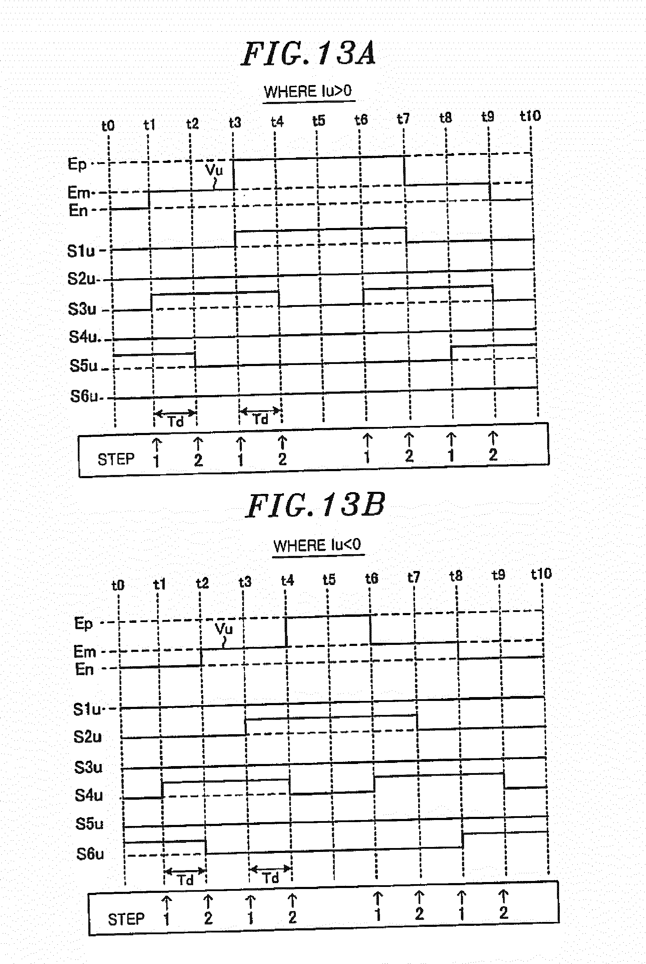

The commutation control using the two-step current commutation method is executed as illustrated in Figs. 13A and 13B. Figs. 13A and 13B are diagrams corresponding to Figs. 5A and 5B and illustrating a relationship between the output phase voltage Vu, the gate signals S1u to S6u and the respective steps of the commutation control in the two-step current commutation method.

(Commutation Pattern of First two-Step Voltage Commutation Method)

The first two-step voltage commutation method is a voltage commutation method in which the input phase voltages outputted to the respective output phases at two steps are switched depending on the magnitude relationship between the input phase voltages Er, Es and Et. For example, when switching the input phase voltages in the order of En, Em and Ep, the first two-step voltage commutation method turns off the unidirectional switch Soi serving as a switching source and turns on the unidirectional switch Sio serving as a switching destination. Furthermore, when switching the input phase voltages in the order of Ep, Em and En, the first two-step voltage commutation method turns off the unidirectional switch Sio serving as a switching source and turns on the unidirectional switch Soi serving as a switching destination.

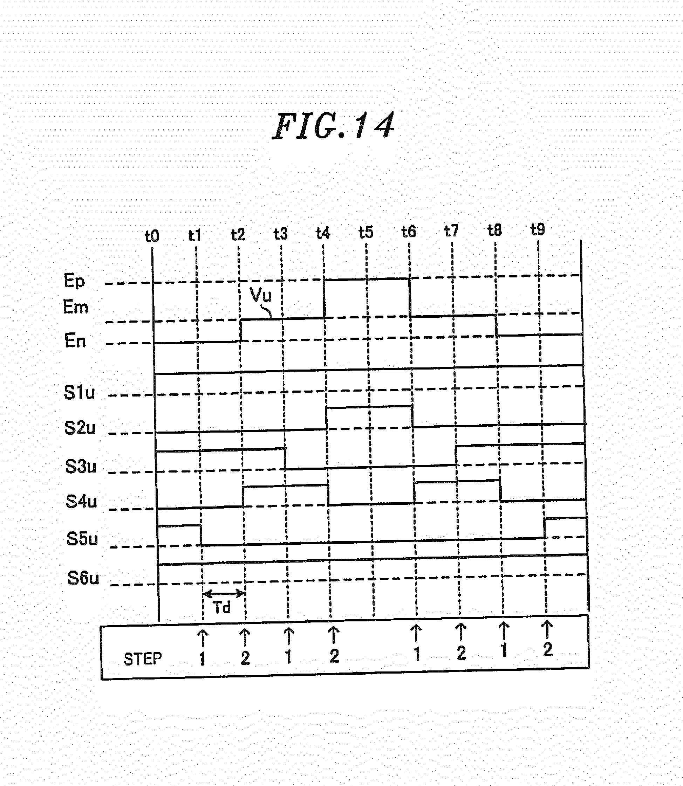

The commutation control using the first two-step voltage commutation method is executed as illustrated in, e.g., Fig. 14. Fig. 14 is a diagram corresponding to Fig. 7 and illustrating a relationship between the output phase voltage Vu, the gate signals S1u to S6u and the respective steps of the commutation control in the first two-step voltage commutation method.

(Commutation Pattern of Second two-Step Voltage Commutation Method)

The second two-step voltage commutation method is a voltage commutation method in which the input phase voltages outputted to the respective output phases at two steps are switched depending on the magnitude relationship between the inter-phase voltages of the input phases. The second two-step voltage commutation method is a commutation method in which commutation at a minimum inter-phase voltage of the input phases is banned.

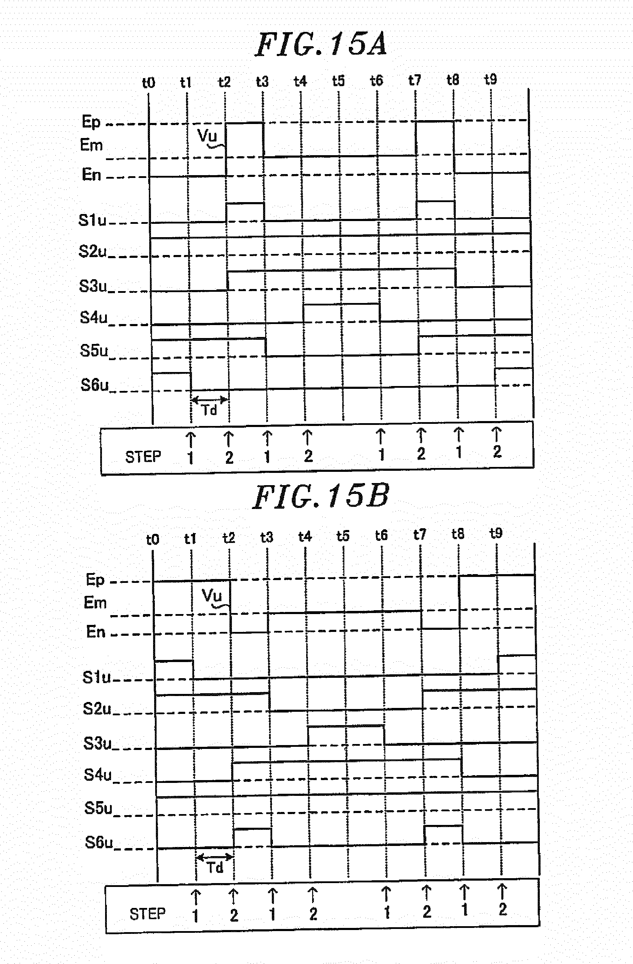

The commutation control using the second two-step voltage commutation method is executed as illustrated in Figs. 15A and 15B. Figs. 15A and 15B are diagrams corresponding to Fig. 7 and illustrating a relationship between the output phase voltage Vu, the gate signals S1u to S6u and the respective steps of the commutation control in the second two-step voltage commutation method. Fig. 15A illustrates a case where Ep-Em>Em-En, and Fig. 15B illustrates a case where Ep-Em<Em-En.

(Commutation Pattern of Third two-Step Voltage Commutation Method)

The third two-step voltage commutation method is a voltage commutation method in which the input phase voltages outputted to the respective output phases at two steps are switched depending on the magnitude relationship between the inter-phase voltages of the input phases.

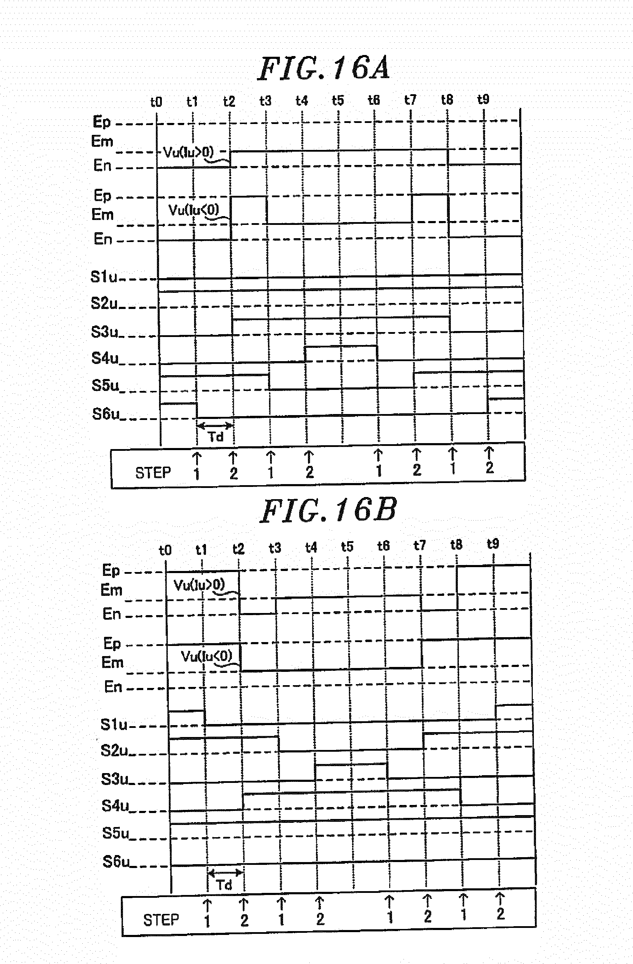

The commutation control using the third two-step voltage commutation method is executed as illustrated in, e.g., Figs. 16A and 16B. Figs. 16A and 16B are diagrams corresponding to Fig. 7 and illustrating a relationship between the output phase voltage Vu, the gate signals S1u to S6u and the respective steps of the commutation control in the third two-step voltage commutation method. Fig. 16A illustrates a case where Ep-Em>Em-En, and Fig. 16B illustrates a case where Ep-Em<Em-En.

(Commutation Pattern of One-Step Current Commutation Method)

The one-step current commutation method is a commutation method in which the input phase voltages outputted to the respective output phases at every step are switched depending on the magnitude relationship between the input phase voltages Er, Es and Et and the polarity of the output phase current Io. The one-step current commutation method is, e.g., a commutation method which sequentially turns on the forward-biased unidirectional switches having the same polarity as that of the output phase current Io or sequentially turns off the reverse-biased unidirectional switches having the same polarity as that of the output phase current Io.

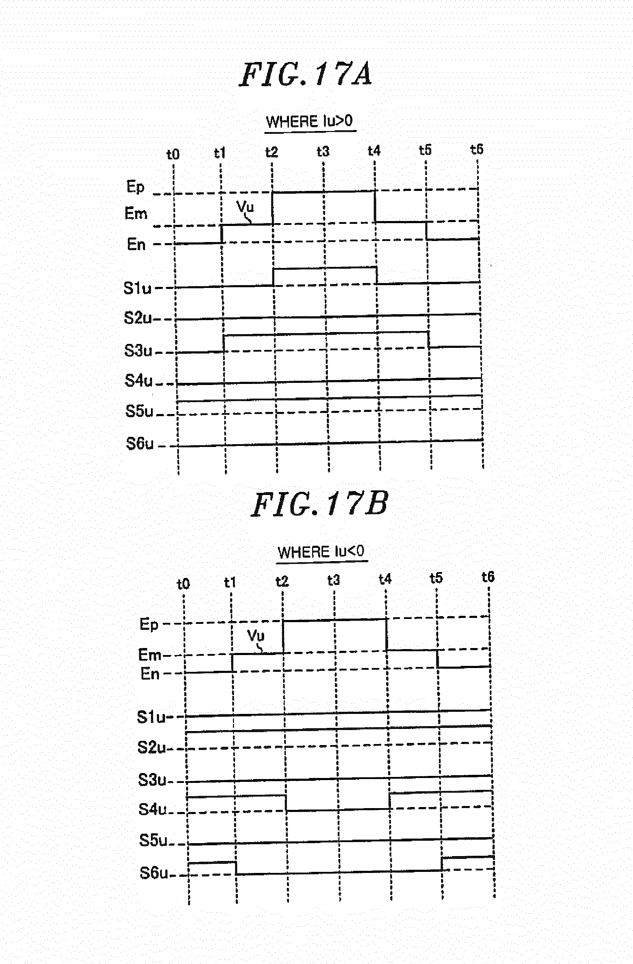

The commutation control using the one-step current commutation method is executed as illustrated in, e.g., Figs. 17A and 17B. Figs. 17A and 17B are diagrams corresponding to Figs. 5A and 5B and illustrating a relationship between the output phase voltage Vu, the gate signals S1u to S6u and the respective steps of the commutation control in the one-step current commutation method.

(Commutation Pattern of Pseudo One-Step Current Commutation Method)

The pseudo one-step current commutation method is a commutation method in which the input phase voltages outputted to the respective output phases at every step are switched depending on the polarity of the output phase current Io. The pseudo one-step current commutation method is, e.g., a commutation method which switches the unidirectional switch having the same polarity as that of the output phase current Io.

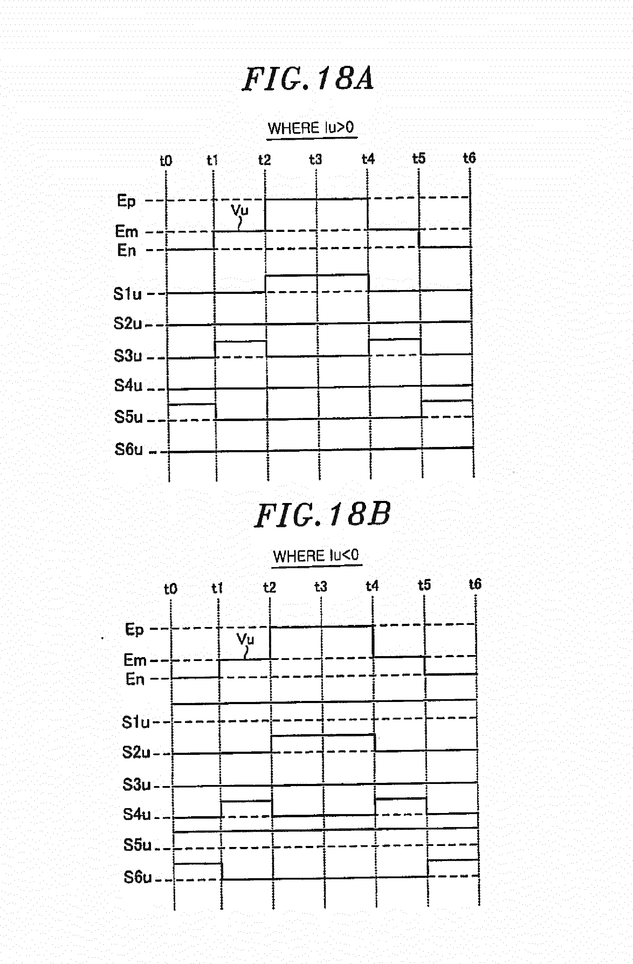

The commutation control using the pseudo one-step current commutation method is executed as illustrated in, e.g., Figs. 18A and 18B. Figs. 18A and 18B are diagrams corresponding to Figs. 5A and 5B and illustrating a relationship between the output phase voltage Vu, the gate signals S1u to S6u and the respective steps of the commutation control in the pseudo one-step current commutation method.

[3. Selection Method of Commutation Pattern]

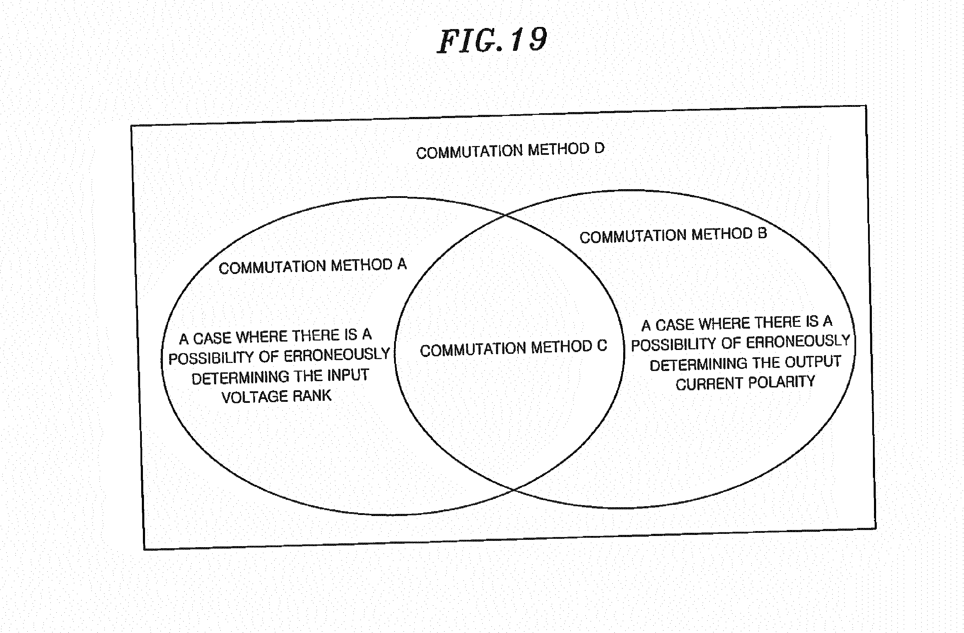

Next, descriptions will be made on one example of a selection method of commutation patterns. Fig. 19 is a diagram illustrating one example of a combination of commutation patterns.

In the example illustrated in Fig. 19, a commutation method conforming to the state of the input phase voltages Er, Es and Et and the state of the output phase currents Iu, Iv and Iw is selected from a commutation method A, a commutation method B, a commutation method C and a commutation method D. Commutation control is performed pursuant to the commutation pattern of the selected commutation method. The commutation methods A to D are selected from two or more kinds of commutation methods.

The commutation pattern of the commutation method A (one example of a first commutation pattern) is a commutation pattern of a commutation method selected in the case where there is a possibility of confusing the magnitude relationship between the input phase voltages Er, Es and Et (hereinafter often referred to as an input voltage rank). The commutation pattern of the commutation method B (one example of a second commutation pattern) is a commutation pattern of a commutation method selected in the case where there is a possibility of confusing the polarity of the output phase currents Iu, Iv and Iw (hereinafter often referred to as an output current polarity).

The commutation pattern of the commutation method C (one example of a third commutation pattern) is a commutation pattern of a commutation method selected in the case where there is a possibility of confusing the input voltage rank and the output current polarity. The commutation pattern of the commutation method D is a commutation pattern of a commutation method selected in the case where the selection condition of any of the commutation methods A, B and C is not satisfied.

As described above, there are different kinds of commutation methods. For that reason, if the commutation method used in commutation control is selected depending on the state of the input phase voltages Er, Es and Et and the output phase currents Iu, Iv and Iw as illustrated in Fig. 19, the power conversion accuracy varies depending on which of the commutation methods is to be used as the commutation methods A to D.

For example, consideration is given to a matrix converter in which one commutation method Z is independently used in commutation control regardless of the state of the input phase voltages Er, Es and Et and the output phase currents Iu, Iv and Iw. In this case, it is desirable to select the commutation methods A to D so that the characteristics of power conversion or the like is not reduced as compared with the matrix converter which makes use of the single commutation method Z.

Thus, the control unit 20 selects the commutation methods A to D so that the sum of the values obtained by weighting the characteristic values of the respective commutation methods A to D based on the selection ratios of the respective commutation methods A to D becomes equal to or smaller than the characteristic value of the commutation method Z. As will be described later, depending on the selection condition of the commutation methods, there may be a case where the characteristic value of some of the commutation methods A to D is regarded as zero and is negligible.

The commutation method and the commutation pattern are different in name from each other but are intended to specify the same one. That is to say, the characteristic value of the commutation method is the characteristic value of the commutation pattern. The selection of the commutation method is the selection of the commutation pattern. Furthermore, the commutation method Z is, for example, a commutation method selected as a comparison target and is, for example, one of the commutation methods set as the commutation methods A to D.

Examples of the characteristic value of the commutation method include a value corresponding to the commutation failure time, a value corresponding to the time required in commutation control (the commutation completion time to be described later), the power loss generated in the bidirectional switch S, etc.

First, descriptions will be made on the value corresponding to the commutation failure time. Examples of the commutation failure time include the time of short circuit between the input phases generated by the error of determination of the input voltage rank and the open time of the output phases generated by the error of determination of the output current polarity. Descriptions will now be made on "the dependency $X_{short}$ on the input voltage rank" which is one example of the value corresponding to the time of short circuit between the input phases generated by the error of determination of the input voltage rank. Furthermore, descriptions will be made on "the dependency $X_{open}$ on the output current polarity" which is one example of the value corresponding to the open time of the output phases generated by the error of determination of the output current polarity.

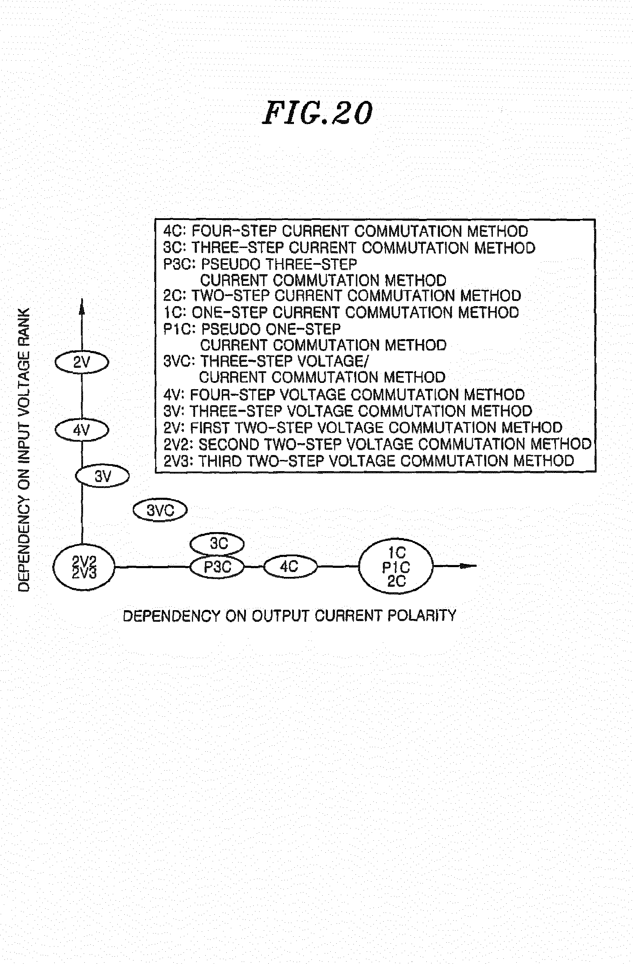

Fig. 20 is a diagram illustrating a relationship between the dependency $X_{short}$ of the respective commutation methods on the input voltage rank and the dependency $X_{open}$ of the respective commutation methods on the output current polarity. As illustrated in Fig. 20, the dependency $X_{short}$ and the dependency $X_{open}$ vary depending on the commutation methods.

The dependency $X_{short}$ on the input voltage rank indicates the degree of influence on the power conversion accuracy in the case where the commutation failure is generated by the error of determination of the input voltage rank. The dependency $X_{short}$ may be found by, e.g., the calculation of the following mathematical formula (1). In the following mathematical formula (1), the ratio of the time $T_{short}$ of short circuit between the output phases to the carrier period Tc of a PWM signal is the dependency $X_{short}$ on the input voltage rank.

$$X_{short} = \frac{T_{short}}{T_c} \quad \cdots (1)$$

In this regard, the commutation methods selected in the case where the input phase voltages Er, Es and Et are in such a state that there is a possibility of erroneously determining the input voltage rank are the commutation methods A and C. The commutation methods B and D are negligible. That is to say, only the dependency $X_{shortA}$ of the commutation method A and the dependency $X_{shortC}$ of the commutation method C affect the dependency $X_{short}$. Accordingly, the dependency $X_{shortABCD}$ in the case where commutation control is performed by selecting the commutation methods A to D may be found by the calculation of the following mathematical formula (2). Selection ratios $K_A$ to $K_D$ are selection ratios of the commutation methods A to D. The sum of the selection ratios $K_A$ to $K_D$ is 1.

$$X_{shortABCD} = \frac{K_A X_{shortA} + K_C X_{shortC}}{K_A + K_B + K_C + K_D} \quad \cdots (2)$$

As can be noted from the foregoing, the dependency $X_{shortABCD}$ is the sum of the value obtained by weighting the selection ratio $K_A$ to the dependency $X_{shortA}$ of the commutation method A and the value obtained by weighting the selection ratio $K_C$ to the dependency $X_{shortC}$ of the commutation method C. As the dependency $X_{shortABCD}$ becomes smaller, the power conversion accuracy grows higher.

Accordingly, by selecting the commutation methods A and C so that the dependency $X_{shortABCD}$ becomes equal to or smaller than the dependency $X_{shortZ}$ of the commutation method Z as represented by the following mathematical formula (3), it is possible to increase the power conversion accuracy.

$$X_{shortABCD} \leq X_{shortZ} \qquad \cdots (3)$$

The dependency $X_{open}$ on the output current polarity indicates, for example, the degree of influence on the power conversion accuracy in the case where the commutation failure is generated by the error of determination of the output current polarity. The dependency $X_{open}$ may be found by, e.g., the calculation of the following mathematical formula (4). In the following mathematical formula (4), the ratio of the open time $T_{open}$ of the input phases to the carrier period Tc of a PWM signal is the dependency $X_{open}$ on the output current polarity.

$$X_{open} = \frac{T_{open}}{T_c} \quad \cdots (4)$$

In this regard, the commutation methods selected in the case where the output phase currents Iu, Iv and Iw are in such a state that there is a possibility of erroneously determining the output current polarity are the commutation methods B and C. The commutation methods A and D are negligible. That is to say, only the dependency $X_{openB}$ of the commutation method B and the dependency $X_{openC}$ of the commutation method C affect the dependency $X_{open}$. Accordingly, the dependency $X_{openABCD}$ in the case where commutation control is performed by selecting the commutation methods A to D may be found by the calculation of the following mathematical formula (5). Selection ratios $K_A$ to $K_D$ are selection ratios of the commutation methods A to D. The sum of the selection ratios $K_A$ to $K_D$ is 1.

$$X_{openABCD} = \frac{K_B X_{openB} + K_C X_{openC}}{K_A + K_B + K_C + K_D} \qquad \cdots (5)$$

As can be noted from the foregoing, the dependency $X_{openABCD}$ is the sum of the value obtained by weighting the selection ratio $K_B$ to the dependency $X_{oppenB}$ of the commutation method B and the value obtained by weighting the selection ratio $K_C$ to the dependency $X_{openC}$ of the commutation method C. As the dependency $X_{openABCD}$ becomes smaller, the power conversion accuracy grows higher.

Accordingly, by selecting the commutation methods B and C so that the dependency $X_{openABCD}$ becomes equal to or smaller than the dependency $X_{openZ}$ of the commutation method Z as represented by the following mathematical formula (6), it is possible to increase the power conversion accuracy.

$$X_{openABCD} \leq X_{openZ} \qquad \cdots (6)$$

The control unit 20 may select the commutation methods A to D so that the dependency $X_{shortABCD}$ satisfies the foregoing mathematical formula (3) and the dependency $X_{openABCD}$ satisfies the foregoing mathematical formula (6). By doing so, it is possible to reduce the commutation failure attributable to the error of determination of the input voltage rank and the commutation failure attributable to the error of determination of the output current polarity. This makes it possible to further increase the power conversion accuracy.

In this way, the control unit 20 selects the commutation methods A to D so that the sum of the value obtained by weighting the dependency $X_{shortB}$ of the commutation method B based on the selection ratio $K_B$ and the value obtained by weighting the dependency $X_{shortC}$ of the commutation method C based on the selection ratio $K_C$ becomes equal to or smaller than the dependency $X_{shortZ}$ of the commutation method Z. This makes it possible to reduce the degree of influence on the power conversion accuracy in the case where commutation failure is generated by the error of determination of the input phase voltages Ep, Em and En.

Furthermore, the control unit 20 selects the commutation methods A to D so that the sum of the value obtained by weighting the dependency $X_{openA}$ of the commutation method A based on the selection ratio $K_A$ and the value obtained by weighting the dependency $X_{openC}$ of the commutation method C based on the selection ratio $K_C$ becomes equal to or smaller than the dependency $X_{openZ}$ of the commutation method Z. This makes it possible to reduce the degree of influence on the power conversion accuracy in the case where commutation failure is generated by the error of determination of the polarity of the output phase currents Iu, Iv and Iw.

Since the commutation method D is a commutation method selected in a region where commutation failure is not generated, commutation failure is not generated by the commutation method D selected in such a region. For that reason, the commutation method D may be any commutation method. From the viewpoint of a minimum pulse, it is preferred that the commutation method D is a commutation method in which the time required in commutation control of the commutation method (hereinafter referred to as a commutation completion time) is short.

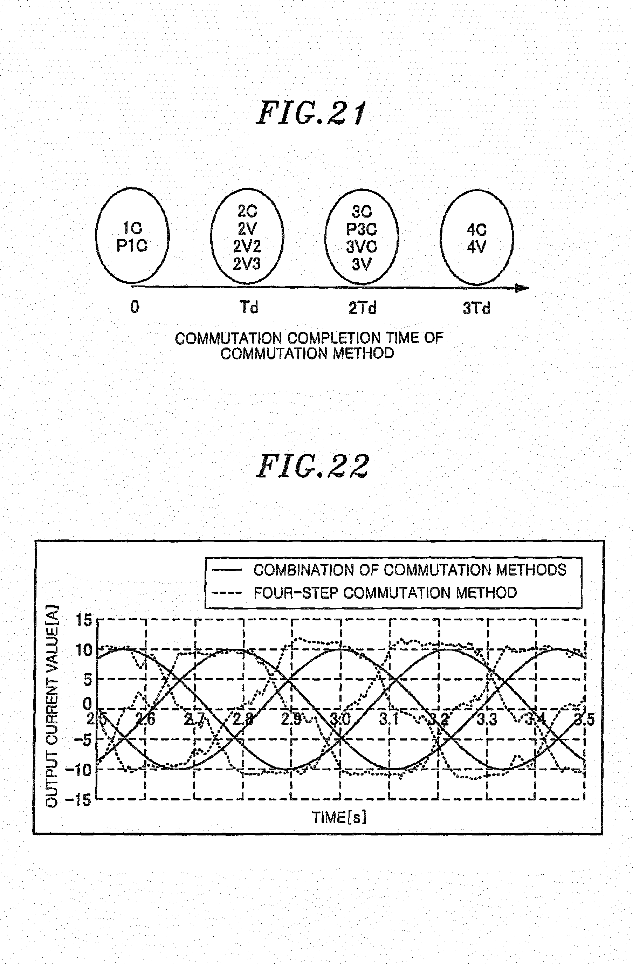

Next, descriptions will be made on a case where the characteristic value of the commutation method is a commutation completion time. Since the control unit 20 according to the present embodiment suppresses reduction of the power conversion accuracy attributable to a minimum pulse, it may be possible to use, e.g., a commutation completion time, as the characteristic value of the commutation method. Fig. 21 is a diagram illustrating a relationship between the commutation completion times of the respective commutation methods. As illustrated in Fig. 21, the commutation completion time varies depending on the commutation methods.

Thus, for example, the commutation completion time $T_{ci}$ is used as the characteristic value of the commutation method i (i=A, B, C or D), and the commutation methods A to D are selected so as to satisfy the following mathematical formula (7). In the following mathematical formula (7), the selection ratio of the commutation method i is a selection ratio Ki.

$$T_{cZ} \geq \frac{\sum Ki \cdot T_{ci}}{\sum Ki}(i = A, B, C, D) \qquad \cdots (7)$$

For example, the selection ratio $K_A$ of the commutation method A is 30%, the selection ratio $K_B$ of the commutation method B is 20%, the selection ratio $K_C$ of the commutation method C is 6%, and the selection ratio $K_D$ of the commutation method D is 44%. In this case, the forgoing mathematical formula (7) can be satisfied by, for example, using the one-step current commutation method as the commutation methods A, C and D and using the two-step voltage commutation method as the commutation method B.

In this way, the commutation methods A to D are selected so that the sum $T_{cABCD}$ of the values obtained by weighting the commutation completion times $T_{ci}$ of the respective commutation methods A to D based on the selection ratios $K_i$ becomes equal to or smaller than the commutation completion time $T_{cZ}$ of the commutation method Z. This makes it possible to suppress reduction of the power conversion accuracy attributable to a minimum pulse.

Fig. 22 is a diagram illustrating simulation results in the case where commutation control is performed by a combination of the commutation methods A to D selected so as to satisfy the foregoing mathematical formula (7) and in the case where commutation control is performed by the four-step current commutation method. In Fig. 22, the output phase currents Iu, Iv and Iw are indicated on the vertical axis, and the time is indicated on the horizontal axis.

For example, by selecting a combination of the commutation methods A to D so as to satisfy at least one of the foregoing mathematical formulae (3) and (6) and the foregoing mathematical formula (7), it is possible to suppress reduction of the power conversion accuracy attributable to commutation failure and reduction of the power conversion accuracy attributable to a minimum pulse.

Descriptions will now be made on the combination of the commutation methods A to D that satisfies all of the foregoing mathematical formulae (3), (6) and (7). For example, the selection ratio $K_A$ is 27%, the selection ratio $K_B$ is 7%, the selection ratio $K_C$ is 3%, and the selection ratio $K_D$ is 63%. The four-step current commutation method is used as the commutation method Z. In this case, if the combinations of the commutation methods A to D are, for example, the following combinations (a) to (d), all of the foregoing mathematical formulae (3), (6) and (7) are satisfied. In the following combinations (a) to (d), the abbreviations of the commutation methods are indicated. The relationship between the full names and the abbreviations of the commutation methods are shown in Fig. 20.

(a) Commutation method A: 1C, commutation method B: 2V, commutation method C: 4C and commutation method D: 1C

(b) Communication A: 2C, commutation method B: 2V, commutation method C: 4C and commutation method D: 2C

(c) Commutation method A: 2C, commutation method B: 3V, commutation method C: 4C and commutation method D: 2C

(d) Commutation method A: 1C, commutation method B: 4C, commutation method C: 4C and commutation method D: 1C

As another example, the selection ratio $K_A$ is 27%, the selection ratio $K_B$ is 7%, the selection ratio $K_C$ is 3%, and the selection ratio $K_D$ is 63%. The second two-step voltage commutation method is used as the commutation method Z. In this case, if the combinations of the commutation methods A to D are, for example, the following combinations (e) and (f), all of the foregoing mathematical formulae (3), (6) and (7) are satisfied.

(e) Commutation method A: 1C, commutation method B: 2V2, commutation method C: 2V2 and commutation method D: 1C

(f) Commutation method A: 4C, commutation method B: 2V2, commutation method C: 2V2 and commutation method D: 1C

Furthermore, the commutation methods A to D are selected so as to satisfy all of the foregoing mathematical formulae (3), (6) and (7) and to satisfy at least one of $X_{shortABC} < X_{shortZ}$, $X_{openABCD} < X_{openZ}$ and $T_{cABCD} < T_{cZ}$. This makes it possible to reliably suppress reduction of the power conversion accuracy.

The commutation method Z is a commutation method capable of obtaining a desired result, for example, in the case where the commutation method Z is independently used in commutation control regardless of the state of the input phase voltages Er, Es and Et and the state of the output phase currents Iu, Iv and Iw. For example, the commutation method Z is a commutation method capable of, when used alone, performing power conversion without causing failure of the power converter unit 10. The commutation method Z is a commutation method capable of, when used alone, obtaining a rated power conversion characteristic.

For example, if there is no possibility of generating a minimum pulse, a combination of the commutation methods A to D is selected so as to satisfy at least one of the foregoing mathematical formulae (3) and (6). On the other hand, if there is a possibility of generating a minimum pulse, a combination of the commutation methods A to D is selected so as to satisfy the foregoing mathematical formula (7). This makes it possible to suppress reduction of the power conversion accuracy attributable to commutation failure and reduction of the power conversion accuracy attributable to a minimum pulse.

Next, descriptions will be made on a case where the characteristic value of the commutation method is a power loss generated in the bidirectional switch S. In order to reduce a power loss, the control unit 20 may select a combination of the commutation methods based on the power loss generated in the bidirectional switch S. For example, assuming that the characteristic value of the commutation method i (i=A, B, C or D) is a power loss $P_i$ and the power loss of the commutation method Z is $P_z$, the commutation methods A to D are selected so as to satisfy the following mathematical formula (8). In the following mathematical formula (8), the selection ratio of the commutation method i is a selection ratio $K_i$.

$$P_Z \geq \frac{\sum K_i \cdot P_i}{\sum K_i} (i = A, B, C, D) \quad \cdots (8)$$

Examples of the power loss generated in the bidirectional switch S include a switching loss of the bidirectional switch S and a conduction loss of the bidirectional switch S. In the commutation method, e.g., the second two-step voltage commutation method, which bans commutation at a minimum line voltage, the switching loss increases. In the case where the unidirectional switches Sio and Soi are FETs, the conduction loss increases if the time period during which only one of the unidirectional switches Sio and Soi is turned on becomes longer.

For example, the control unit 20 may select a combination of the commutation methods A to D so as to satisfy at least one of the foregoing mathematical formulae (3) and (6) and the foregoing mathematical formulae (7) and (8). By doing so, it is possible to suppress reduction of the power conversion accuracy attributable to commutation failure and reduction of the power conversion accuracy attributable to a minimum pulse. Furthermore, it is possible to suppress an increase of the power loss.

In the case where the selection ratios $K_A$ to $K_D$ are predictable, the commutation methods A to D may be selected in advance so as to satisfy one of the foregoing mathematical formulae (3), (6), (7) and (8). In this case, instead of selecting a combination of the commutation methods A to D with the control unit 20, a combination of the commutation methods A to D may be set in advance in the control unit 20.

[4. Configuration of Control Unit 20]

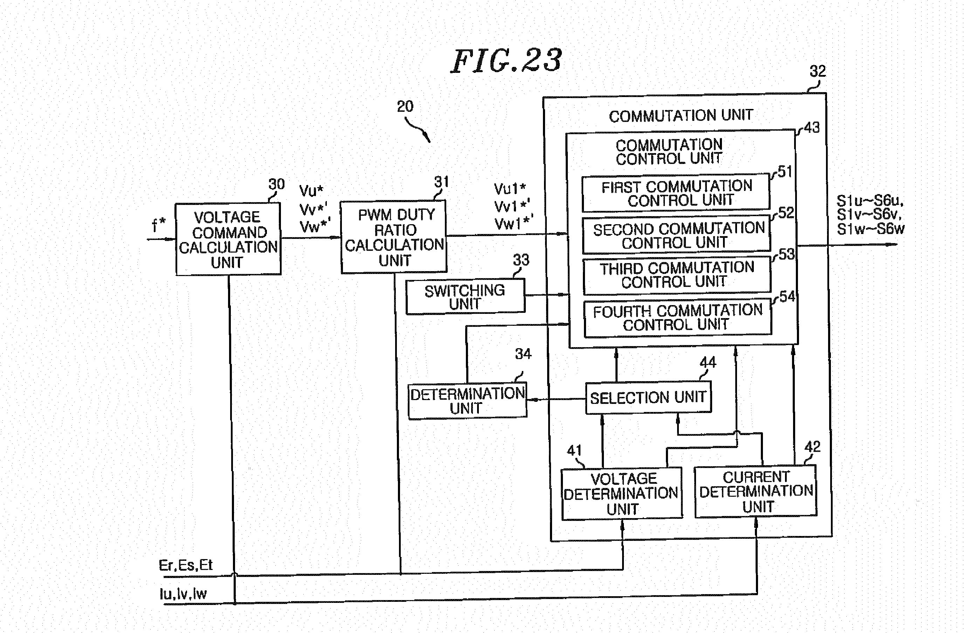

Fig. 23 is a diagram illustrating a configuration example of the control unit 20. As illustrated in Fig. 23, the control unit 20 includes a voltage command calculation unit (e.g., a voltage command calculator) 30, a PWM duty ratio calculation unit (e.g., a PWM duty ratio calculator) 31, a commutation unit (e.g., a commutator) 32, a switching unit (e.g., a switcher) 33 and a determination unit (e.g., a determinator) 34.

The control unit 20 includes a microcomputer, which includes a CPU (Central Processing Unit), a ROM (Read Only Memory), a RAM (Random Access Memory), an input/output port and the like, and various kinds of circuits. By reading and executing a program stored in the ROM, the CPU of the microcomputer functions as the voltage command calculation unit 30, the PWM duty ratio calculation unit 31, the commutation unit 32, the switching unit 33 and the determination unit 34.

Alternatively, at least one or all of the voltage command calculation unit 30, the PWM duty ratio calculation unit 31, the commutation unit 32, the switching unit 33 and the determination unit 34 may be configured by hardware such as an ASIC (Application Specific Integrated Circuit), an FPGA(Field Programmable Gate Array) or the like.

[4.1. Voltage Command Calculation Unit 30]

The voltage command calculation unit 30 generates and outputs voltage commands Vu*, Vv* and Vw* of the respective output phases based on the frequency commands f* and the output phase currents Iu, Iv and Iw. The frequency commands f* are commands of the frequencies of the output phase voltages Vu, Vv and Vw.

[4.2. PWM Duty Ratio Calculation Unit 31]

The PWM duty ratio calculation unit 31 generates PWM voltage commands Vu1*, Vv1* and Vw1* based on the voltage commands Vu*, Vv* and Vw* and the input phase voltages Er, Es and Et. The technique of generating the PWM voltage commands Vu1*, Vv1* and Vw1* is well-known in the art. For example, the techniques disclosed in Japanese Patent Application Publication Nos. 2008-048550 and 2012-239265 may be used as the technique of generating the PWM voltage commands Vu1*, Vv1* and Vw1*.

For example, in the time period during which the magnitude relationship between the input phase voltages Er, Es and Et remains unchanged, the PWM duty ratio calculation unit 31 processes the input phase voltages Ep, Em and En in the order of the magnitude of the input phase voltages Er, Es and Et. The PWM duty ratio calculation unit 31 converts the voltage commands Vu*, Vv* and Vw* to pulse width modulation signals corresponding to the respective voltage values of the input phase voltages Ep, Em and En and outputs the pulse width modulation signals as the PWM voltage commands Vu1*, Vv1* and Vw1*.

[4.3. Commutation Unit 32]

The commutation unit 32 executes commutation control by which the input phases connected to the output phases are switched by the bidirectional switch S. For example, the commutation unit 32 selects one of the commutation methods A to D based on the polarity of each of the output phase currents Iu, Iv and Iw and the magnitude relationship between the input phase voltages Er, Es and Et. The commutation unit 32 generates gate signals S1u to S6u, S1v to S6v and S1w to S6w from the PWM voltage commands Vu1*, Vv1* and Vw1* so that commutation is performed in the order pursuant to the commutation pattern of the selected commutation method.

The commutation unit 32 includes a voltage determination unit (e.g., a voltage determinator) 41, a current determination unit (e.g., a current determinator) 42, a commutation control unit (e.g., a commutation controller) 43 and a selection unit (e.g., a selector) 44.

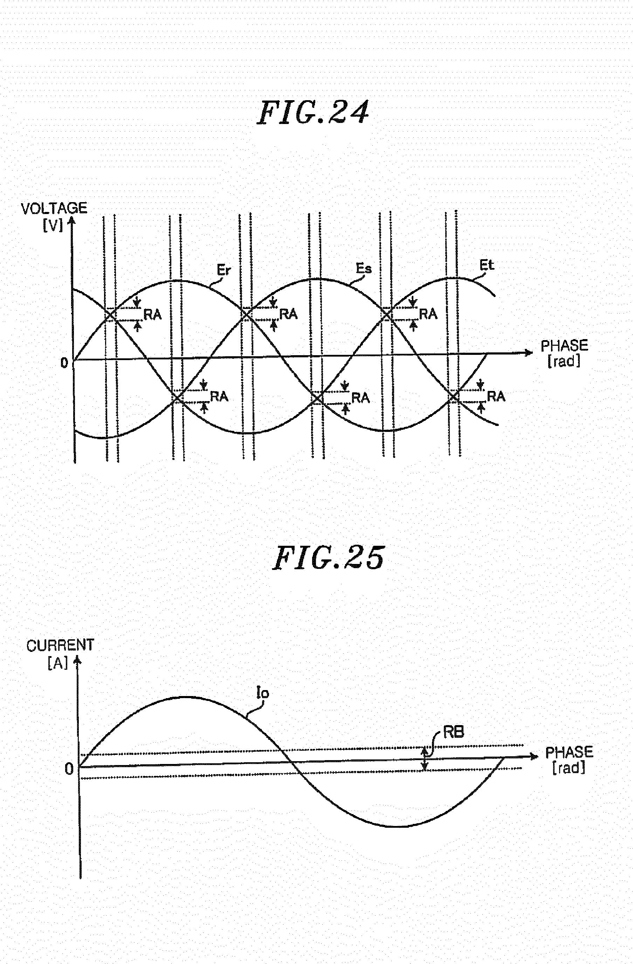

The voltage determination unit 41 determines the input voltage rank and notifies the determination result to the commutation control unit 43. As illustrated in Fig. 24, the voltage determination unit 41 determines whether the inter-phase voltage of the input phases (e.g., the voltage between the R-phase and the S-phase) falls within a predetermined range RA. Fig. 24 is a diagram illustrating a relationship between the input phase voltages Er, Es and Et and the predetermined range RA. The voltage determination unit 41 may determine, based on the phase $\theta i$ of the input phase voltage Vi, whether the inter-phase voltage of the input phases falls within the predetermined range RA.

The current determination unit 42 determines the output current polarity and notifies the determination result to the commutation control unit 43. As illustrated in Fig. 25, the current determination unit 42 determines whether the output phase current Io falls within a predetermined range RB including zero. Fig. 25 is a diagram illustrating a relationship between the output phase current Io and the predetermined range RB. The current determination unit 42 may determine, based on the phase $\theta o$ of the output phase current Io, whether the output phase current Io falls within the predetermined range RB.

The commutation control unit 43 includes, e.g., a first to a fourth commutation control units (e.g., a first to a fourth commutation controllers) 51 to 54. The first commutation control unit 51 generates a gate signal Sg pursuant to the commutation pattern of commutation method A. The second commutation control unit 52 generates a gate signal Sg pursuant to the commutation pattern of commutation method B. The third commutation control unit 53 generates a gate signal Sg pursuant to the commutation pattern of commutation method C. The fourth commutation control unit 54 generates a gate signal Sg pursuant to the commutation pattern of commutation method D.

The selection unit 44 selects one of the first to fourth commutation control units 51 to 54, based on the determination result of the voltage determination unit 41 and the determination result of the current determination unit 42, and causes the selected commutation control unit to execute commutation control.

For example, if the inter-phase voltage of the input phases falls within the predetermined range RA and if the output phase current Io falls outside the predetermined range RB, the selection unit 44 selects the first commutation control unit 51. As another example, if the inter-phase voltage of the input phases falls outside the predetermined range RA and if the output phase current Io falls within the predetermined range RB, the selection unit 44 selects the second commutation control unit 52.

As a further example, if the inter-phase voltage of the input phases falls within the predetermined range RA and if the output phase current Io falls within the predetermined range RB, the selection unit 44 selects the third commutation control unit 53. As a still further example, if the inter-phase voltage of the input phases falls outside the predetermined range RA and if the output phase current Io falls outside the predetermined range RB, the selection unit 44 selects the fourth commutation control unit 54.

[4.4. Switching Unit 33]

The switching unit 33 switches a first mode in which commutation control is performed pursuant to the commutation pattern selected by the selection unit 44 as described above and a second mode in which commutation control is performed pursuant to a predetermined commutation pattern. In the case where the first mode is set by the switching unit 33, the commutation control unit 43 generates a gate signal Sg using the commutation control unit selected by the selection unit 44 from the first to fourth commutation control units 51 to 54.

In the case where the second mode is set by the switching unit 33, the commutation control unit 43 generates a gate signal Sg pursuant to the commutation pattern of the predetermined commutation method (e.g., the second two-step voltage commutation method). In the second mode, the gate signal Sg is generated by, e.g., the first commutation control unit 51 among the first to fourth commutation control units 51 to 54.

[4.5. Determination Unit 34]

The determination unit 34 determines the commutation methods used in the first to fourth commutation control units 51 to 54, based on the selection ratios of the first to fourth commutation control units 51 to 54. The determination unit 34 sets the determined commutation methods in the first to fourth commutation control units 51 to 54.

The determination unit 34 selects the commutation methods A to D from the aforementioned commutation methods, based on the selection ratios $K_i$ of the commutation methods i, so as to suppress at least one of the reduction of the power conversion accuracy and the power loss. The determination unit 34 sets the selected commutation methods in the first to fourth commutation control units 51 to 54.

For example, the determination unit 34 selects the commutation methods A to D, which satisfy one or more of the foregoing mathematical formulae (3), (6), (7) and (8), from the aforementioned commutation methods. The determination unit 34 sets the selected commutation methods in the first to fourth commutation control units 51 to 54.

Furthermore, the determination unit 34 may store a table in which the combinations of the commutation methods A to D corresponding to the kinds of the AC power source 2 and the kinds of the load 3 are set. In this case, the determination unit 34 acquires, from the table, the combinations of the commutation methods A to D corresponding to the kinds of the AC power source 2 and the kinds of the load 3 designated by an installation personnel or the like through an input unit (not illustrated) of the matrix converter 1. The determination unit 34 sets the acquired combinations in the first to fourth commutation control units 51 to 54.

For example, the determination unit 34 sets the information of determined commutation pattern tables in the first to fourth commutation control units 51 to 54. As an example, the first to fourth commutation control units 51 to 54 may store a plurality of commutation pattern tables, and the determination unit 34 may notify the information indicating the numbers of the commutation methods to the first to fourth commutation control units 51 to 54. In this case, the first to fourth commutation control units 51 to 54 may generate gate signals Sg based on the commutation pattern tables of the commutation methods corresponding to the numbers of the commutation methods notified from the determination unit 34.

In Fig. 23, there is illustrated an example where the commutation control unit 43 includes the first to fourth commutation control units 51 to 54. However, in the commutation control unit 43, all the necessary combinations of the commutation patterns of the commutation methods may be stored as a table. In this case, the commutation control unit 43 selects the commutation method according to the output current polarity or the input voltage rank, from the combinations of the commutation methods A to D determined by the determination unit 34, and generates a gate signal Sg pursuant to the commutation pattern of the selected commutation method.

In this way, the determination unit 34 determines the commutation methods A to D based on the characteristic values of the commutation methods and the selection ratios of the selection unit 44. This makes it possible to suitably select the commutation methods A to D depending on the AC power source 2 or the load 3 connected to the matrix converter 1. For that reason, even when the AC power source 2 or the load 3 is changed, it is possible to suppress the reduction of the power conversion accuracy or the power loss.

[5. Control Flow of Control Unit 20]

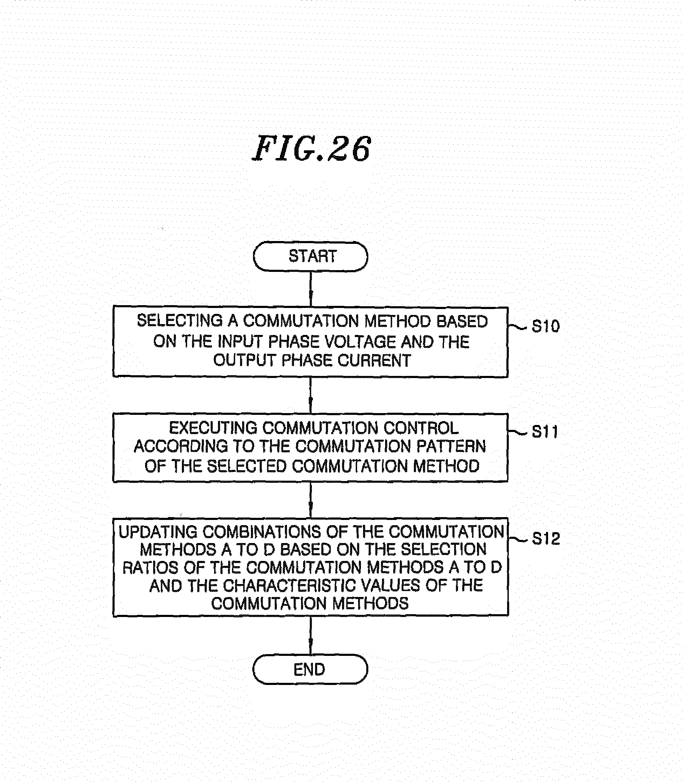

Fig. 26 is a flowchart illustrating one example of a flow of the control process performed by the control unit 20. The control unit 20 repeatedly performs the control process, which is illustrated in Fig. 26, at a predetermined cycle.

As illustrated in Fig. 26, the control unit 20 selects one of the commutation methods A to D based on the state of the input phase voltage Vi and the state of the output phase current Io (Step S10). For example, the control unit 20 selects one of the commutation methods A to D depending on whether the output phase current Io falls within a predetermined range RA and whether a difference between two input phase voltages Vi falls within a predetermined range RB.

Based on at least one of the polarity of the output phase current Io and the magnitude relationship between the input phase voltages Er, Es and Et, the control unit 20 performs commutation control pursuant to the commutation pattern of the commutation method selected at Step S10 (Step S11).

The control unit 20 updates the combinations of the commutation methods A to D based on the selection ratios and the characteristic values of the commutation methods A to D (Step S12). For example, the control unit 20 determines the commutation methods A to D so that the sum of the values obtained by weighting the characteristic values of the commutation methods A to D based on the selection ratios of the commutation methods selected by the selection unit 44 becomes equal to or smaller than the characteristic value of the commutation method Z. The control unit 20 stores the characteristic value of the commutation method Z as a target value of a characteristic value in an internal memory. The control unit 20 sets the determined commutation methods A to D in the first to fourth commutation control units 51 to 54.

In the above-described embodiment, the combination of the commutation methods used in the commutation control is a combination of four commutation methods A to D. However, the combination of the commutation methods used in the commutation control may be a combination of two or three commutation methods or may be a combination of five or more commutation methods.

In the above-described embodiment, descriptions has been made on a case where the commutation unit 32 includes the first to fourth commutation control units 51 to 54. However, it may be possible to employ a configuration in which one commutation control unit performs commutation control pursuant to the commutation patterns of a plurality of commutation methods.

Other effects and modifications may be readily derived by those skilled in the art. For that reason, the broad aspect of the present disclosure is not limited to the specific disclosure and the representative embodiments shown and described above. Accordingly, the present disclosure can be modified in many different forms without departing from the spirit and scope defined by the appended claims and the equivalents thereof.

**Claims**

1.   A matrix converter, comprising:

a power converter including a plurality of bidirectional switches provided between respective phases of an AC power source and respective phases of a load; and
a commutator configured to perform commutation control by which input phases connected to output phases are switched using the bidirectional switches,
wherein the commutator includes a selector configured to select one commutation pattern from a plurality of commutation patterns based on at least one of a state of phase voltages of the AC power source and a state of phase currents of the load, and a commutation controller configured to perform commutation control by controlling the bidirectional switches pursuant to the commutation pattern selected by the selector to switch a connection state of the AC power source and the load, and
the sum of values obtained by weighting characteristic values of respective ones of the plurality of the commutation patterns based on selection ratios at which the respective commutation patterns are selected by the selector is equal to or smaller than a characteristic value of one commutation pattern to be compared.

2.   The matrix converter of claim 1, wherein the characteristic values are values corresponding to time periods required for performing the commutation control pursuant to the respective commutation patterns.

3.   The matrix converter of claim 1 or 2, wherein the commutator further includes a current determinator configured to determine polarity of the phase currents of the load, and
the characteristic values are values corresponding to time periods during which the respective phases of the load are open-circuited when the polarity of the phase currents of the load is erroneously determined by the current determinator.

4.   The matrix converter of any one of claims 1 to 3, wherein the commutator further includes a voltage determinator configured to determine a magnitude relationship between the phase voltages of the AC power source, and
the characteristic values are values corresponding to time periods during which the respective phases of the AC power source are short-circuited when the magnitude relationship between the phase voltages of the AC power source is erroneously determined by the voltage determinator.

5. The matrix converter of any one of claims 1 to 4, further comprising:

a determinator configured to acquire selection ratios of the respective commutation patterns selected by the selector and to determine the plurality of the commutation patterns based on the acquired selection ratios.

6. The matrix converter of any one of claims 1 to 5, further comprising:

a switcher configured to switch a first mode in which commutation control is performed pursuant to the commutation pattern selected by the selector and a second mode in which commutation control is performed pursuant to a predetermined commutation pattern,
wherein the commutation controller is configured to perform the commutation control based on the mode switched by the switcher.

7. The matrix converter of claim 1 or 2, wherein the commutator further includes a current determinator configured to determine polarity of the phase currents of the load, and a voltage determinator configured to determine a magnitude relationship between the phase voltages of the AC power source,
the plurality of the commutation patterns include a first to a fourth commutation patterns,
the first commutation pattern is selected by the selector when there is a possibility that the polarity is erroneously determined by the current determinator,
the second commutation pattern is selected by the selector when there is a possibility that the magnitude relationship is erroneously determined by the voltage determinator,
the third commutation pattern is selected by the selector when there is a possibility that the polarity is erroneously determined by the current determinator and when there is a possibility that the magnitude relationship is erroneously determined by the voltage determinator, and
the fourth commutation pattern is selected by the selector when selection conditions of the first to the third commutation patterns are not satisfied.

8. A matrix converter control device, comprising:

a selector configured to select one commutation pattern from a plurality of commutation patterns based on states of respective phases of an AC power source and respective phases of a load which are connected to each other via a power converter having a plurality of bidirectional switches; and
a commutation controller configured to perform commutation control by controlling the bidirectional switches pursuant to the commutation pattern selected by the selector to switch a connection state of the AC power source and the load,
wherein the sum of values obtained by weighting characteristic values of respective ones of the plurality of the commutation patterns based on selection ratios at which the respective commutation patterns are selected by the selector is equal to or smaller than a characteristic value of one commutation pattern to be compared.

9. A matrix converter control method, comprising:

selecting one commutation pattern from a plurality of commutation patterns based on states of respective phases of an AC power source and respective phases of a load which are connected to each other via a power converter having a plurality of bidirectional switches;
performing commutation control by controlling the bidirectional switches pursuant to the commutation pattern selected in the selecting one commutation pattern to switch a connection state of the AC power source and the load; and
setting the plurality of the commutation patterns used in the selecting one commutation pattern so that the sum of values obtained by weighting characteristic values of respective ones of the plurality of the commutation patterns based on selection ratios at which the respective commutation patterns are selected in the selecting one commutation pattern becomes equal to or smaller than a characteristic value of one commutation pattern to be compared.

*FIG.1*

# FIG.2

# FIG.3

FIG.4

## FIG.5A

WHERE Iu>0

## FIG.5B

WHERE Iu<0

EP 2 991 216 A2

## FIG.6

## FIG.7

21

# FIG.8

## FIG.9A
### WHERE Io>0

## FIG.9B
### WHERE Io<0

# FIG.10A

WHERE Io>0

# FIG.10B

WHERE Io<0

EP 2 991 216 A2

# FIG.11A

WHERE Io>0

# FIG.11B

WHERE Io<0

25

# FIG.12A

WHERE Io>0

# FIG.12B

WHERE Io<0

## FIG.13A

WHERE Iu>0

## FIG.13B

WHERE Iu<0

# FIG.14

## FIG.15A

## FIG.15B

## FIG.16A

## FIG.16B

## FIG.17A

WHERE Iu>0

## FIG.17B

WHERE Iu<0

# FIG.18A

WHERE Iu>0

# FIG.18B

WHERE Iu<0

# FIG.19

COMMUTATION METHOD D

COMMUTATION METHOD A

COMMUTATION METHOD B

A CASE WHERE THERE IS A POSSIBILITY OF ERRONEOUSLY DETERMINING THE INPUT VOLTAGE RANK

COMMUTATION METHOD C

A CASE WHERE THERE IS A POSSIBILITY OF ERRONEOUSLY DETERMINING THE OUTPUT CURRENT POLARITY

EP 2 991 216 A2

33

# FIG.20

DEPENDENCY ON INPUT VOLTAGE RANK

DEPENDENCY ON OUTPUT CURRENT POLARITY

4C: FOUR-STEP CURRENT COMMUTATION METHOD
3C: THREE-STEP CURRENT COMMUTATION METHOD
P3C: PSEUDO THREE-STEP
        CURRENT COMMUTATION METHOD
2C: TWO-STEP CURRENT COMMUTATION METHOD
1C: ONE-STEP CURRENT COMMUTATION METHOD
P1C: PSEUDO ONE-STEP
        CURRENT COMMUTATION METHOD
3VC: THREE-STEP VOLTAGE/
        CURRENT COMMUTATION METHOD
4V: FOUR-STEP VOLTAGE COMMUTATION METHOD
3V: THREE-STEP VOLTAGE COMMUTATION METHOD
2V: FIRST TWO-STEP VOLTAGE COMMUTATION METHOD
2V2: SECOND TWO-STEP VOLTAGE COMMUTATION METHOD
2V3: THIRD TWO-STEP VOLTAGE COMMUTATION METHOD

## FIG.21

COMMUTATION COMPLETION TIME OF
COMMUTATION METHOD

## FIG.22

## FIG.23

Block diagram: f* → VOLTAGE COMMAND CALCULATION UNIT (30) → Vu*, Vv*', Vw*' → PWM DUTY RATIO CALCULATION UNIT (31) → Vu1*, Vv1*', Vw1*' → COMMUTATION UNIT (32)

COMMUTATION UNIT — COMMUTATION CONTROL UNIT (43): FIRST COMMUTATION CONTROL UNIT (51), SECOND COMMUTATION CONTROL UNIT (52), THIRD COMMUTATION CONTROL UNIT (53), FOURTH COMMUTATION CONTROL UNIT (54) → S1u~S6u, S1v~S6v, S1w~S6w

SWITCHING UNIT (33), DETERMINATION UNIT (34), SELECTION UNIT (44), VOLTAGE DETERMINATION UNIT (41), CURRENT DETERMINATION UNIT (42)

Er, Es, Et; Iu, Iv, Iw

20

# FIG.24

# FIG.25

# FIG.26

```
              ┌─────────────┐
              │    START    │
              └─────────────┘
                     │
   ┌─────────────────────────────────────┐
   │ SELECTING A COMMUTATION METHOD BASED │ ～ S10
   │   ON THE INPUT PHASE VOLTAGE AND THE │
   │         OUTPUT PHASE CURRENT         │
   └─────────────────────────────────────┘
                     │
   ┌─────────────────────────────────────┐
   │     EXECUTING COMMUTATION CONTROL    │ ～ S11
   │  ACCORDING TO THE COMMUTATION PATTERN│
   │  OF THE SELECTED COMMUTATION METHOD  │
   └─────────────────────────────────────┘
                     │
   ┌─────────────────────────────────────┐
   │UPDATING COMBINATIONS OF THE COMMUTATION│ ～ S12
   │  METHODS A TO D BASED ON THE SELECTION │
   │ RATIOS OF THE COMMUTATION METHODS A TO D│
   │   AND THE CHARACTERISTIC VALUES OF THE │
   │        COMMUTATION METHODS            │
   └─────────────────────────────────────┘
                     │
              ┌─────────────┐
              │     END     │
              └─────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010246174 A
- JP 2008048550 A
- JP 2012239265 A